# EUROPÄISCHE PATENTSCHRIFT

(11) **EP 0 633 587 B1**
(45) Veröffentlichungstag und Bekanntmachung des Hinweises auf die Patenterteilung: **05.03.1997**
(21) Anmeldenummer: 94110496.0
(22) Anmeldetag: 06.07.1994
(51) Int. Cl.: H01H 31/00, H02B 13/075

(54) **Gekapselte, isoliergasgefüllte Mittelspannungsschaltzelle**
Gas-insulated metal clad middle tension switching cell
Cellule de commutation blindée à isolation gazeuse pour moyenne tension

(30) Priorität: 07.07.1993 DE 4322530
(43) Veröffentlichungstag der Anmeldung: 11.01.1995
(73) Patentinhaber: Fritz Driescher KG, Spezialfabrik für Elektrizitätswerksbedarf GmbH & Co., D-41844 Wegberg (DE)
(72) Erfinder: Hollmann, Fritz, D-41844 Wegberg (DE); Driescher, Albrecht, D-41199 Mönchengladbach (DE)
(74) Vertreter: Bergen, Klaus, Dipl.-Ing.

(56) Entgegenhaltungen:
- EP-A- 0 068 951
- EP-A- 0 100 510
- GB-A- 924 092
- US-A- 2 084 893

## Beschreibung

Die Erfindung betrifft eine gekapselte, isoliergasgefüllte Mittelspannungsschaltzelle. Eine derartige Schaltzelle ist in der europäischen Patentschrift 0 068 951 beschrieben. In einem dichten, isoliergasgefüllten Gehäuse dieser Mittelspannungsschaltzelle sind mehrere in senkrechter Richtung verschiebbar montierte Kontaktbolzen angeordnet, die durch eine dauernde elektrische Verbindung mit einer entsprechenden, isolierten Anschlußklemme am Gehäuse verbunden sind. Es ist mindestens ein Kontaktbolzen für je eine der drei Phasen vorhanden und durch einen drei feste Stellungen aufweisenden Betätigungsmechanismus aufeinanderfolgend von einer Schließstellung in eine mittlere Öffnungs- und Isolierstellung und eine Erdleitungsstellung zu bringen, wobei der Kontaktbolzen an seinem einen Ende einen Kontakt aufweist, der in der Schließstellung mit einem feststehenden, vom Gehäuse isolierten Kontakt zusammenarbeitet, der mit einer Sammelschiene verbunden ist und an seinem entgegengesetzten Ende einen zweiten Kontakt aufweist, der in der geerdeten Stellung mit einem mit dem Gehäuse elektrisch verbundenen Erdungskontakt zusammenkommt, der gegenüber der Sammelschiene in der senkrechten Richtung mit dem Kontaktbolzen fluchtend angeordnet ist.

Bei dieser bekannten Mittelspannungsschaltzelle ist nachteilig, daß für die Schaltbolzen eine geradlinige Führung erforderlich ist, die einerseits durch eine Führung der Schaltbolzen in einer den mit der Sammelschiene zusammenwirkenden Kontakten zugeordneten Löschkammer und andererseits durch zu den Kontaktbolzen parallele Führungsstangen, in denen ein Isolierkörper geführt ist, gebildet wird. Der Isolierkörper verbindet mehrere Schaltbolzen starr miteinander und weist eine Quernut auf, in die ein Zapfen an einem Kurbelarm einer Schaltwelle, die den Betätigungsmechanismus darstellt, eingreift.

In der mittleren Öffnungs- und Isolierstellung der Schaltwelle liegt der Kurbelarm im wesentlichen waagerecht und greift mit seinem Zapfen außermittig in die Quernut ein. Hierdurch besteht die Gefahr eines Verkantens des Isolierkörpers auf den Führungsstangen, was zum Verklemmen führen kann. Um dies zu verhindern, müssen sowohl der Isolierkörper als auch die Führungsstangen massiv und verhältnismäßig groß ausgeführt sein. Ein weiterer Nachteil besteht bei dieser Anordnung darin, daß die Drehachse der Schaltwelle senkrecht zum Isolierkörper stehen muß. Dies bedeutet, wenn mit dem Isolierkörper z.B. drei Schaltbolzen verbunden sind und diese über eine Schaltwelle betätigt werden, daß die Schaltbolzen in einer Ebene parallel zur Vorderseite des Gehäuses der Mittelspannungsschaltzelle angeordnet sein müssen, wenn die Betätigung von der Vorderseite aus erfolgen soll. Wenn nun mehrere Schaltbolzen für jede Phase vorgesehen sind und getrennt voneinander geschaltet werden sollen, müssen dennoch die Schaltbolzen jeder Phase und die der einzelnen Phasen untereinander in einer Ebene parallel zur Vorderseite des Gehäuses liegen, so daß sich dadurch eine große Breite des Gehäuses der Mittelspannungsschaltzelle ergibt.

Des weiteren läßt sich mit der bekannten Mittelspannungsschaltzelle nicht ohne weiteres ein Transformatorschaltfeld erstellen, da bei Transformatorschaltfeldern in der Regel eine Sicherung vorgesehen ist und gefordert wird, sowohl vor als auch hinter den Sicherungen zu erden. Dies läßt sich bei der bekannten Mittelspannungsschaltzelle nur dadurch erreichen, daß eine zusätzliche Schaltzelle parallel zur ersten Mittelspannungsschaltzelle nur zum Erden der Sicherungen angeordnet wird.

Der Erfindung liegt die Aufgabe zugrunde, die Führung und die Betätigung der Schaltbolzen zu verbessern, um bei einfachem Aufbau eine gedrängte Bauweise zu erhalten. Des weiteren soll mit der Erfindung bei angebauten Sicherungen in Verbindung mit Transformatorschaltfeldern eine Erdung beidseitig der Sicherungen mit demselben Schaltbolzen erreicht werden.

Zur Lösung dieser Aufgabe wird eine gekapselte, isoliergasgefüllte Mittelspannungszelle mit den Merkmalen des Hauptanspruchs vorgeschlagen.

Mit dieser Anordnung läßt sich eine einfache, praktisch reibungsfreie Geradführung der Kontaktbolzen durch die vorzugsweise als waagerechter Lenker oder alternativ als flexible Strombrücke gestaltete elektrische Verbindung mit dem dritten Kontakt und eine weitere dazu beabstandete Führung des Kontaktbolzens erreichen. Diese zweite Führung kann aus einer Führung im Bereich des freien Endes des Kontaktbolzens in einer dieses freie Ende übergreifenden Löschkammer bestehen oder durch einen zu dem ersten, etwa waagerechten Lenker beabstandeten, dazu parallelen, ebenfalls etwa waagerechten, gegenüber dem Gehäuse isolierten Lenker erfolgen. Zwar bewegen sich die Lenkerenden während der Schaltbewegungen auf einem Kreisbogen, wodurch eine geringfügige, quer zur Bewegungsrichtung der Schaltbolzen gerichtete Verlagerung eintritt, jedoch ist diese Verlagerung so geringfügig, daß dadurch die Kontaktierung der ersten oder zweiten Kontakte nicht beeinträchtigt wird.

Der bzw. die ersten Kontakte können an eine über wenigstens einen Isolator mit einer Oberwand des Gehäuses verbundene Sammelschiene angeschlossen sein, von der für jeden ersten Kontakt eine Löschkammer ausgehen kann, in der sich das die ersten Kontakte kontaktierende Ende des Schaltbolzens bewegt.

Der oder die zweiten Kontakte kann bzw. können an einem mit einer Unterwand des Gehäuses verbundenen Isolator angeordnet und mittels eines Erdungsbandes mit dem Gehäuse verbunden sein. Vorzugsweise kann bzw. können der oder die zweiten Kontakte als Messerkontakte ausgebildet und im Bewegungsbereich der mit dem dritten Kontakt elektrisch leitend verbundenen waagerechten Lenker angeordnet sein. Da das Kontaktieren eines Messerkontaktes gleitend erfolgt, wird hierdurch auch bei unsauberen Kontaktflächen eine einwandfreie Erdung sofort erreicht.

Die Schaltwelle läßt sich parallel zur Ebene von mehreren nebeneinanderliegenden Schaltbolzen anordnen. Wenn z.B. drei Schaltbolzen jeweils für eine Phase vorgesehen sind, lassen sich die Schaltbolzen für alle Phasen in drei Ebenen anordnen, wodurch zwar die Tiefe der Mittelspannungsschaltzelle vergrößert, dafür jedoch die Breite erheblich verringert wird.

Der dritte Kontakt kann an einer Durchführung für ein außen anzuschließendes Kabel oder eine Sicherung und diese wiederum an einer Seitenwand des Gehäuses angeordnet sein.

Wenn in einer gegenüberliegenden Seitenwand des Gehäuses eine weitere Durchführung angeordnet ist, läßt sich ein weiterer Lenker elektrisch leitend mit einem Kontakt an dieser Durchführung und einer vom Kontaktbolzen elektrisch isolierten Kontaktbolzenverlängerung anordnen. Ein weiterer Erdungskontakt läßt sich dann an der Gehäuseunterwand im Bewegungsbereich der Kontaktbolzenverlängerung oder des weiteren Lenkers anordnen. Die Kontakte oder Durchführungen lassen sich außerhalb des Gehäuses über eine Sicherung miteinander verbinden, wodurch eine Erdung sowohl vor als auch hinter der Sicherung erreicht wird, so daß sich die erfindungsgemäße Mittelspannungsschaltzelle insbesondere bei Transformatorschaltfeldern verwenden läßt und dabei alle vom Betreiber im allgemeinen verlangten sicherheitstechnischen Aspekte erfüllt.

Wie bereits zuvor erwähnt, besteht eine besonders vorteilhafte Ausgestaltung der Erfindung darin, daß die elektrische Verbindung zwischen dem dritten Kontakt und dem Kontaktbolzen aus einer flexiblen Strombrücke besteht, vorzugsweise aus einem flexiblen Bänderkabel, wie beispielsweise einem Flachlitzenband. Derartige Bänderkabel sind handelsüblich und besitzen darüber hinaus den Vorteil, daß unter Beibehaltung ihrer außerordentlich hohen Flexibilität nahtlose Kontakthülsen an den Bänderenden unter hohem Druck lötfrei aufgepreßt werden, so daß eine extrem verdichtete massive Anschlußfläche entsteht, die sich in überraschend einfacher Weise als Kontaktmesser eignet und im Rahmen der Erfindung im montierten Zustand das freie Ende des Kontaktbolzens überragt, um in der entsprechenden Position in den als Gegenstück zu diesem Kontaktmesser ausgebildeten zweiten Kontakt eintauchen zu können.

Die Erfindung wird nachstehend anhand mehrerer in der Zeichnung dargestellter Ausführungsbeispiele näher erläutert. Es zeigen:
- Fig. 1: einen Querschnitt durch eine erste Ausführungsform der erfindungsgemäßen Mittelspannungsschaltzelle;
- Fig. 2: einen Längsschnitt durch die Schaltzelle gemäß Fig. 1;
- Fig. 3: einen Querschnitt durch eine zweite Ausführungsform der erfindungsgemäßen Mittelspannungsschaltzelle;
- Fig. 4: einen Querschnitt durch eine weitere Ausführungsform;
- Fig. 5: einen Querschnitt durch eine vierte Ausführungsform;
- Fig. 6: einen Längsschnitt durch die Schaltzelle gemäß Fig. 5; und
- Fig. 7: einen Querschnitt durch eine fünfte Ausführungsform.

Von einer Mittelspannungsschaltzelle für ein Schaltfeld ist nur schematisch ein Metallgehäuse 1 dargestellt, das isoliergasgefüllt ist, z.B. mit Schwefelhexafluorid. Das Gehäuse 1 weist eine Oberwand 2, eine Unterwand 3, Seitenwände 4, 5, eine Vorderwand 33 und eine Rückwand 34 auf. In der Nähe der Oberwand 2 sind drei erste Kontakte 6 angeordnet, die sich in Löschkammern 7 befinden. Diese ersten Kontakte 6 sind jeweils mit einer Netzphase über eine Sammelschiene 8 verbunden und hängen an der Oberwand 2 über Isolatoren 9. Drei zweite, als Messerkontakte ausgebildete Kontakte 10 sind mit dem Gehäuse 1 elektrisch leitend verbunden. Drei dritte Kontakte 13 sind an den mit der Seitenwand 4 verbundenen drei Isolatoren 11 angeordnet und mittels Verbindungsschienen 12 an den mit der Vorderwand 33 verbundenen drei Durchführungen 14 für die anzuschließenden Kabel verbunden. Mit jedem Kontakt 13 ist ein Lenkerpaar 16 elektrisch leitend und gelenkig verbunden. Dieses Lenkerpaar 16 verläuft etwa waagerecht von dem jeweiligen dritten Kontakt 13 zu einer Gelenkverbindung 17 mit einem senkrechten Kontaktbolzen 15. Das freie Ende jedes Kontaktes 15 ist in einer Gleitführung 21 einer jeden Löschkammer 7 geführt.

Parallel zur Ebene der Kontaktbolzen 15 und beabstandet dazu ist eine Schaltwelle 18 angeordnet, die in der Rückwand 34 drehbar gelagert und durch die Vorderwand 33 ebenfalls drehbar gelagert und abgedichtet hinausgeführt ist. Diese Schaltwelle 18 besteht aus Isoliermaterial bzw. ist gegenüber dem Gehäuse 1 elektrisch isoliert. Von der Schaltwelle 18 gehen Kurbelarme 19 aus, die in der gezeigten, waagerechten Stellung etwa in der Ebene der Kontaktbolzen 15 enden. Je ein Kurbelarmpaar 19 reicht bis in den Bereich eines Kontaktbolzens 15. An den Enden dieses Kurbelarmpaars ist ein Lenkerpaar 20 angelenkt, das etwa senkrecht nach unten geführt ist und an der Gelenkverbindung 17 zusammen mit dem Lenkerpaar 16 am unteren Ende des Kontaktbolzens 15 angelenkt ist.

In der gezeigten mittleren Stellung der Schaltwelle 18 mit etwa waagerecht liegenden Kurbelarmen 19 kontaktieren die Kontaktbolzen 15 weder die ersten, mit der Sammelschiene 8 verbundenen Kontakte 6, noch die zweiten, geerdeten Kontakte 10. Die dritten Kontakte 13 sind somit ohne Spannung.

Wird die Schaltwelle 18 so gedreht, daß sich die Kurbelarme 19 nach oben bewegen, gelangen die freien Enden der Kontaktbolzen 15 in Berührung mit den ersten Kontakten 6, so daß eine leitende Verbindung von den Sammelschienen 8 über die Kontakte 6, den Kontaktbolzen 15, die Lenkerpaare 16 zu den dritten Kontakten 13 und von dort zu einem Verbraucher hergestellt ist.

Wird die Schaltwelle 18 nunmehr in eine Richtung gedreht, in der sich die Kurbelarme 19 nach unten bewegen, wird zunächst der Kontakt zwischen den ersten Kontakten 6 und den Kontaktbolzen 15 geöffnet, wobei ein etwaig entstehender Lichtbogen in den Löschkammern 7 in bekannter Weise gelöscht wird. In der unteren, strichpunktiert dargestellten Stellung sind die Schaltbolzen 15 mit den Lenkerpaaren 16 so weit nach unten bewegt, daß sich die Lenkerpaare 16 über die zweiten, als Messerkontakte ausgebildeten Kontakte 10 schieben, wodurch die dritten Kontakte 13 und damit der Verbraucher geerdet sind.

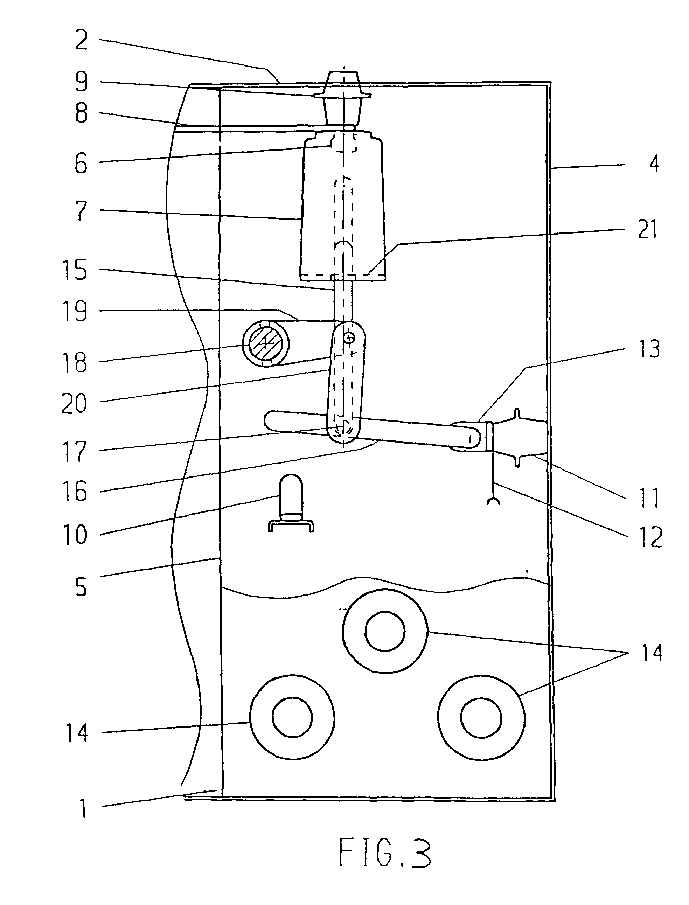

Bei der in Fig. 3 dargestellten Ausführungsform sind die Lenkerpaare 16 über die Gelenkverbindung 17 hinaus verlängert. Dementsprechend sind auch die Messerkontakte 10 verlagert, so daß die Lenkerpaare 16 mit ihren verlängerten Enden die Messerkontakte 10 in der unteren Schaltstellung kontaktieren.

Die Lenkerführung durch die Lenkerpaare 16 einerseits und die Gleitführungen 21 in den Löschkammern 7 andererseits für die Kontaktbolzen 15 gewährleistet eine einfach herzustellende, reibungsarme und gegen Verkanten unempfindliche Geradführung der Kontaktbolzen 15.

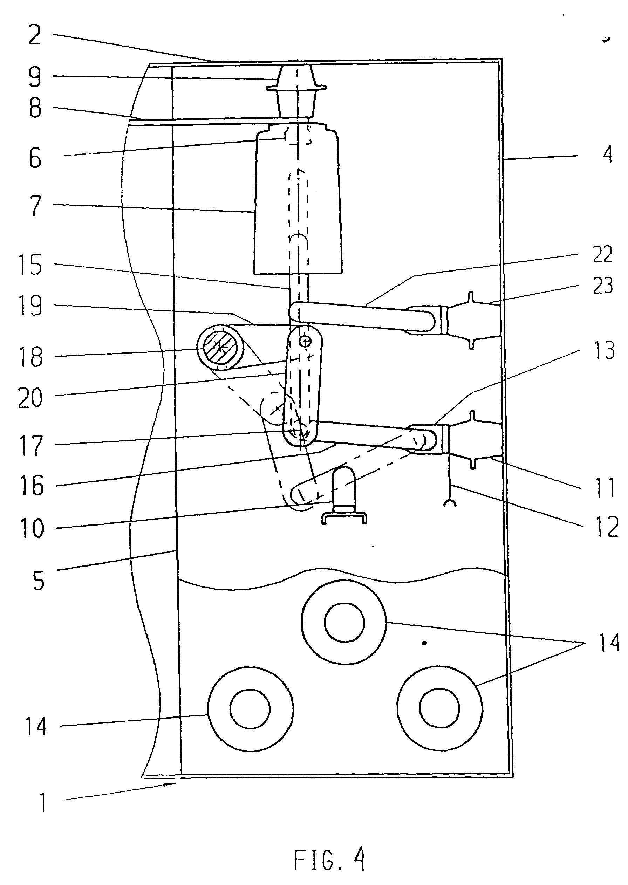

Eine andere Ausführungsform der Geradführung der Kontaktbolzen 15 ist in Fig. 4 dargestellt. Hier besteht die Führung aus einem unteren Lenkerpaar 16 und einem dazu parallelen, oberen Lenkerpaar 22. Das obere Lenkerpaar 22 ist einerseits am Kontaktbolzen 15 und andererseits an einem Isolator 23, der an der Seitenwand 4 befestigt ist, angelenkt. Auf diese Weise wird eine Parallelogrammführung des Kontaktbolzens 15 erreicht, die ebenfalls unempfindlich gegen Verkantungen und reibungsarm sowie einfach im Aufbau ist.

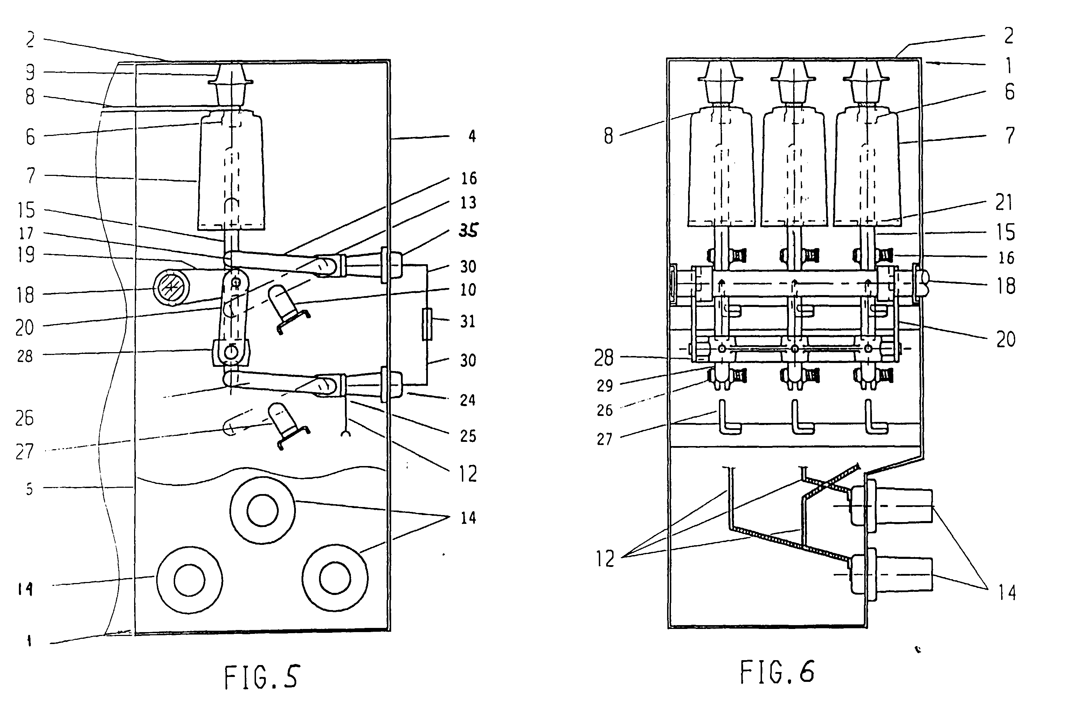

Die in Fig. 5 und 6 dargestellte Ausführungsform ist besonders zur Verwendung in Transformatorfeldern mit einer Absicherung der Transformatoren durch eine Sicherung 31 für jede Phase geeignet. Diese Sicherung 31 ist außerhalb des Gehäuses 1 der Schaltzelle angeordnet und einerseits mit einer Durchführung 35 über eine Kabelverbindung 30 oder eine Steckverbindung und andererseits über eine Durchführung 24 mit der Verbindungsschiene 12 und über die Durchführung 14 mit einer Phasenwicklung des Transformators verbunden.

Bei derartigen Transformatorfeldern wird aus sicherheitstechnischen Aspekten verlangt, eine Erdung sowohl vor als auch hinter der Sicherung 31 vorzunehmen. Dies läßt sich mit der erfindungsgemäßen Mittelspannungsschaltzelle auf sehr einfache Weise erreichen, indem die Sicherung 31 über eine Kabelverbindung 30 oder eine Steckverbindung mit der weiteren Durchführung 24 verbunden wird, die an der Seitenwand 4 des Gehäuses 1 angeordnet ist. Diese Durchführung 24 weist im Gehäuseinneren einen Kontakt 25 auf, der über die Verbindungsschiene 12 mit der Durchführung 14 und über ein Lenkerpaar 26 mit einer Kontaktbolzenverlängerung 29 verbunden ist. Diese Kontaktbolzenverlängerung 29 ist über einen Isolierblock 28 starr mit dem eigentlichen Kontaktbolzen 15 verbunden. Im Gehäuseinneren sind Erdungskontakte 27 angeordnet. Auf diese Weise erfolgt in der strichpunktierten Stellung einerseits eine Erdung der Kontakte 13 mittels der Lenkerpaare 16 und der geerdeten Messerkontakte 10 und andererseits der Kontakte 25 mittels der Lenkerpaare 26 und der geerdeten Messerkontakte 27.

Der Isolierblock 28 kann, wie in Fig. 6 ersichtlich, als drei Kontaktbolzen 15 und drei Kontaktbolzenverlängerungen 29 verbindend ausgebildet sein, so daß die Schaltwelle 18 nur zwei Kurbelarme 19 und ein Lenkerpaar 20 aufzuweisen braucht, um die Kontaktbolzen 15 und die Kontaktbolzenverlängerungen 29 parallel und gemeinsam in die drei Schaltstellungen zu bringen.

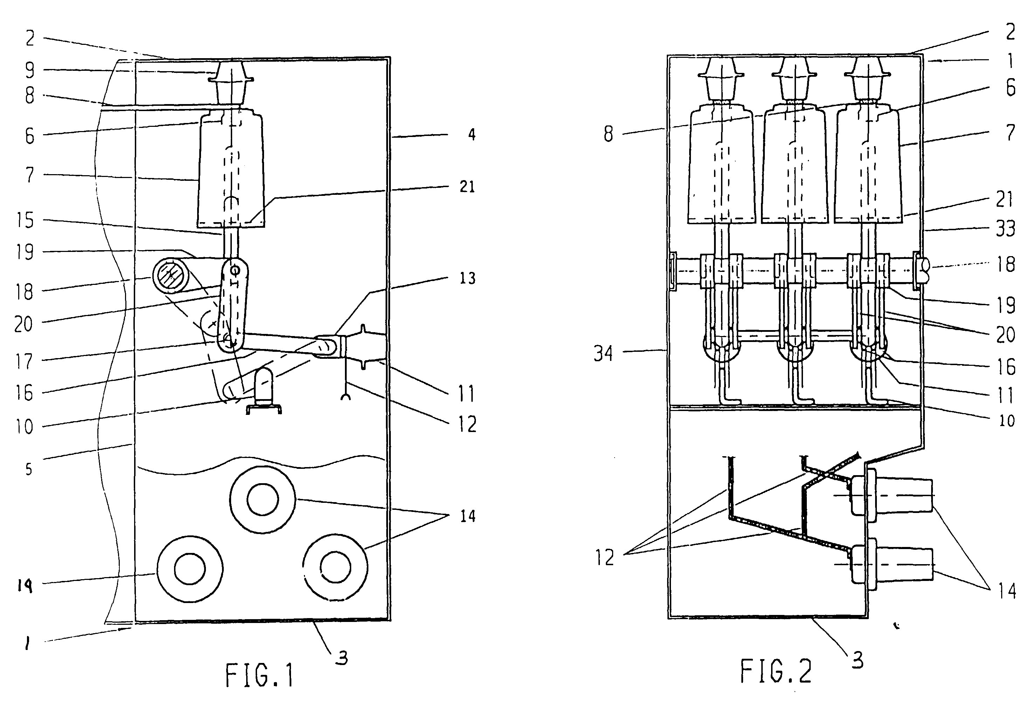

Demgegenüber besitzen die Ausführungsformen gemäß den Fig. 1 bis 4 nur einen Abstandshalter in Form eines isolierenden Verbindungsbolzens 32 zwischen den Gelenkverbindungen 17, so daß in diesem Fall für jeden Kontaktbolzen 15 ein Kurbelarmpaar 19 an der Schaltwelle 18 und ein Lenkerpaar 20 vorgesehen sind.

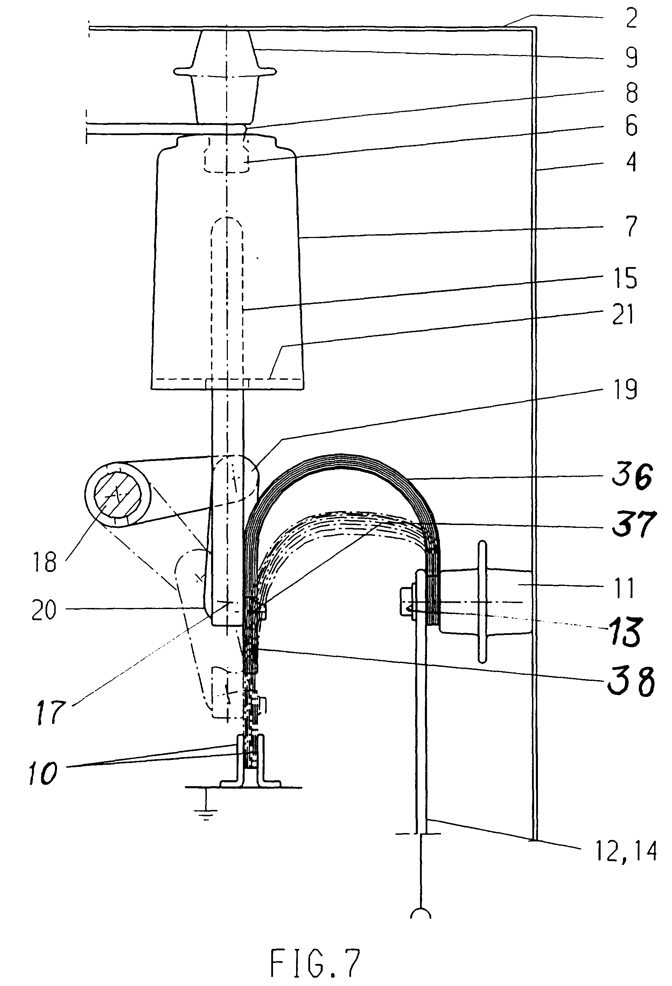

In Fig. 7 ist eine weitere Ausführungsform der Erfindung dargestellt, wobei für mit den zuvor erläuterten Beispielen übereinstimmende Teile dieselben Bezugziffern verwendet wurden. Diese Ausführung unterscheidet sich von den übrigen grundsätzlich dadurch, daß die elektrische Verbindung zwischen dem Kontaktbolzen 15 und dem dritten Kontakt 13 flexibel gestaltet ist, und zwar mittels eines flexiblen Bänderkabels 36 vorzugsweise als Flachlitzenband. Derartige handelsübliche Bänder sind jeweils an ihren Enden in zuvor erläuterter Weise zu einem festen Paket gestaltet, das nicht nur einerseits leicht mit dem Bolzen 15 und dem Kontakt 13 elektrisch leitend verschraubt werden kann, sondern sich andererseits überraschend vorteilhaft im Rahmen der vorliegenden Erfindung am mit dem Kontaktbolzen 15 verbundenen Kabelende als Kontaktmesser 38 gestalten läßt, wenn dieses feste Paket das freie Ende des Kontaktbolzens 15 überragend an diesem befestigt wird. Es ergibt sich dann die in Fig. 7 dargestellte Situation, bei der das Kontaktmesser 38 in der strichpunktierten Lage in den entsprechend der Darstellung gestalteten zweiten Kontakt 10 (Erdungskontakt) eintaucht.

## Patentansprüche

1. Gekapselte, isoliergasgefüllte Mittelspannungsschaltzelle mit
- einem isoliergasgefüllten Gehäuse (1),
- wenigstens einem ersten ortsfesten, vom Gehäuse (1) isolierten Kontakt (6),
- wenigstens einem zweiten, davon beabstandeten, mit dem Gehäuse (1) elektrisch leitend verbundenen und geerdeten Kontakt (10),
- wenigstens einem von beiden Kontakten (6, 10) beabstandet angeordneten dritten Kontakt (13),
- wenigstens einem im Gehäuse (1) isoliert, im wesentlichen geradlinig geführten, einendig mit dem dritten Kontakt (13) elektrisch leitend verbundenen (16, 36) Kontaktbolzen (15),
- wenigstens einer im Gehäuse (1) drehbar gelagerten, elektrisch isolierten, den Kontaktbolzen (15) und die elektrische Verbindung (16, 36) zum dritten Kontakt (13) bewegenden Schaltwelle (18) mit einem Kurbelarm (19) und wenigstens einem an diesem angelenkten, etwa senkrechten Lenker (20) mit einer Gelenkverbindung (17) zum Kontaktbolzen (15), wobei
- in der ersten Stellung der Schaltwelle (18) der Kontaktbolzen (15) den ersten Kontakt (6), in der zweiten Stellung der Schaltwelle (18) die elektrische Verbindung (16, 36) den zweiten Kontakt (10) kontaktiert und in der dazwischenliegenden, mittleren Stellung keiner der Kontakte (6, 10) kontaktiert wird.

2. Mittelspannungsschaltzelle nach Anspruch 1, dadurch gekennzeichnet, daß die elektrische Verbindung aus wenigstens einem etwa waagerechten Lenker (16) besteht, der mit seinem einen Ende gelenkig mit dem dritten Kontakt und mit seinem anderen Ende gelenkig mit dem freien Ende des etwa senkrechten Lenkers (20) im Bereich der Gelenkverbindung (17) verbunden ist.

3. Mittelspannungsschaltzelle nach Anspruch 1 oder 2, dadurch gekennzeichnet, daß der erste Kontakt (6) an eine über wenigstens einen Isolator (9) mit einer Oberwand (2) des Gehäuses (1) verbundene Sammelschiene (8) angeschlossen ist.

4. Mittelspannungsschaltzelle nach einem oder mehreren der Ansprüche 1 bis 3, dadurch gekennzeichnet, daß der erste Kontakt (6) in einer Löschkammer (7) angeordnet ist.

5. Mittelspannungsschaltzelle nach Anspruch 4, gekennzeichnet durch eine Führung (21) im Bereich des freien Endes des Kontaktbolzens (15) in der Löschkammer (7).

6. Mittelspannungsschaltzelle nach einem oder mehreren der Ansprüche 1 bis 5, gekennzeichnet durch eine isolierte Lenkerführung (22) für das freie Ende des Kontaktbolzens (15).

7. Mittelspannungsschaltzelle nach einem oder mehreren der Ansprüche 1 bis 6, dadurch gekennzeichnet, daß der zweite Kontakt (10) als Messerkontakt ausgebildet und im Bewegungsbereich der Lenker (16) angeordnet ist.

8. Mittelspannungsschaltzelle nach einem oder mehreren der Ansprüche 1 bis 7, dadurch gekennzeichnet, daß ein weiterer Lenker (26) elektrisch leitend mit einem Kontakt (25) und einer vom Kontaktbolzen (15) elektrisch isolierten Kontaktbolzenverlängerung (29) angeordnet ist, ein weiterer Erdungskontakt (27) im Bewegungsbereich des weiteren Lenkers (26) angeordnet ist und die Kontakte (13, 25) über eine Sicherung (31) miteinander verbunden sind.

9. Mittelspannungsschaltzelle nach Anspruch 8, dadurch gekennzeichnet, daß der dritte Kontakt (13) an einer Durchführung (35) und der Kontakt (25) an einer weiteren Durchführung (24) angeordnet ist und daß die Durchführungen (34, 24) außerhalb des Gehäuses (1) über eine Sicherung (31) verbunden sind.

10. Mittelspannungsschaltzelle nach Anspruch 1, 3, 4, 5 oder 6, dadurch gekennzeichnet, daß die elektrische Verbindung aus mindestens einer flexiblen Strombrücke (36) zwischen dem dritten Kontakt (13) und dem Kontaktbolzen (15) besteht.

11. Mittelspannungsschaltzelle nach Anspruch 10, gekennzeichnet durch flexible Bänderkabel.

12. Mittelspannungsschaltzelle nach Anspruch 11, gekennzeichnet durch Flachlitzenbänder.

13. Mittelspannungsschaltzelle nach einem oder mehreren der Ansprüche 10 bis 12, dadurch gekennzeichnet, daß die flexiblen Strombrücken (36) mindestens an ihrem mit dem Kontaktbolzen (15) verbundenen Ende je eine massive Anschlußfläche (37) besitzen, die mit ihrem über das Kontaktbolzenende hinausragenden Ende ein Kontaktmesser (38) bildet.

14. Mittelspannungsschaltzelle nach Anspruch 13, dadurch gekennzeichnet, daß der zweite Kontakt (10) im Bewegungsbereich des Kontaktmessers (38) angeordnet ist.

## Claims

1. An enclosed, gas-insulated medium voltage switchgear cell comprising
- a housing (1) filled with insulating gas,
- at least one first fixed contact (6), insulated from the housing (1),
- at least one second contact (10) spaced therefrom, electrically connected to the housing (1) and earthed,
- at least one third contact (13) spaced apart from both said contacts (6, 10),
- at least one contact rod (15), insulated in the housing (1), guided to move substantially rectilinearly and electrically connected (16, 36) at one end to the third contact (13),
- at least one operating shaft (18) rotatably mounted in the housing (1), electrically insulated and moving the contact rod (15) and the electrical connection (16, 36) to the third contact (13), said shaft having a crank arm (19) to which is hinged at least one substantially vertical drive link (20) having a hinged connection (17) to the contact rod (15), such that
- in the first position of the operating shaft (18) the contact rod (15) contacts the first contact (6), in the second position of the operating shaft (18) the electrical connection (16, 36) contacts the second contact (10), and in the intermediate, middle position neither of the contacts (6, 10) is contacted.

2. A medium voltage switchgear cell according to claim 1, characterised in that the electrical connection comprises at least one substantially horizontal drive link (16) which has one of its ends hingedly connected to the third contact and its other end hingedly connected to the free end of the substantially vertical drive link (20) in the vicinity of the hinged connection (17).

3. A medium voltage switchgear cell according to claim 1 or claim 2, characterised in that the first contact (6) is joined to a busbar (8) which is connected via at least one insulator (9) to an upper wall (2) of the housing (1)

4. A medium voltage switchgear cell according to one or more of claims 1 to 3, characterised in that the first contact (6) is located in an arcing chamber (7).

5. A medium voltage switchgear cell according to claim 4, characterised by a guide (21) in the vicinity of the free end of the contact rod (15) in the arcing chamber (7).

6. A medium voltage switchgear cell according to one or more of claims 1 to 5, characterised by an insulated link guide (22) for the free end of the contact rod (15).

7. A medium voltage switchgear cell according to one or more of claims 1 to 6, characterised in that the second contact (10) is in the form of a blade contact and is located in the range of movement of the guide link (16).

8. A medium voltage switchgear cell according to one or more of claims 1 to 7, characterised in that a further link (26) is located in electrical connection with a contact (25) and with a contact rod extension (29) electrically insulated from the contact rod (15), a further earthing contact (27) is located in the range of movement of the further link (26) and the contacts (13, 25) are connected together through a fuse (31).

9. A medium voltage switchgear cell according to claim 8, characterised in that the third contact (13) is located on a bushing (35) and the contact (25) on a further bushing (24) and that the bushings (35, 24) are connected outside the housing (1) through a fuse (31).

10. A medium voltage switchgear cell according to claim 1, 3, 4, 5 or 6, characterised in that the electrical connection consists of at least one flexible current bridge (36) between the third contact (13) and the contact rod (15).

11. A medium voltage switchgear cell according to claim 10, characterised by flexible strip cables.

12. A medium voltage switchgear cell according to claim 11, characterised by multistrand strips.

13. A medium voltage switchgear cell according to one or more of claims 10 to 12, characterised in that each of the flexible current bridges (36) has, at least on its end connected to the contact rod (15), a solid terminal face (37) which, together with its end which projects beyond the end of the contact rod, forms a contact blade (38).

14. A medium voltage switchgear cell according to claim 13, characterised in that the second contact (10) is located in the field of movement of the contact blade (38).

## Revendications

1. Cellule de commutation blindée à isolation gazeuse pour moyenne tension, comprenant
- un boîtier (1) rempli de gaz isolant,
- au moins un premier contact fixe (6), isolé du boîtier (1),
- au moins un deuxième contact (10) distant du premier, relié en conduction électrique au boîtier (1) et mis à la terre,
- au moins un troisième contact (13), disposé à distance des deux contacts (6, 10),
- au moins une clavette de contact (15), guidée essentiellement en ligne droite en isolation dans le boîtier (1) et reliée (16, 36) en conduction électrique par une extrémité au troisième contact (13),
- au moins un arbre de commutation (18), monté à rotation dans le boîtier (1), électriquement isolé, déplaçant la clavette de contact (15) et la liaison électrique (16, 36) vers le troisième contact (13), avec un bras de manivelle (19) et au moins une bielle approximativement verticale (20) articulée à ce bras, bielle qui est pourvue d'une liaison articulée (17) vers la clavette de contact (15),
- la clavette de contact (15) entrant en contact avec le premier contact (6) dans la première position de l'arbre de commutation (18), la liaison électrique (16, 36) entrant en contact avec le deuxième contact (10) dans la deuxième position de l'arbre de commutation (18), et aucun des contacts (6, 10) n'étant mis en contact dans la position médiane intermédiaire.

2. Cellule de commutation pour moyenne tension selon la revendication 1, **caractérisée** en ce que la liaison électrique est constituée d'au moins une bielle (16) approximativement horizontale, qui est reliée de façon articulée au troisième contact par l'une de ses extrémités et qui, par son autre extrémité, est reliée de façon articulée à l'extrémité libre de la bielle approximativement verticale (20) dans la région de la liaison articulée (17).

3. Cellule de commutation pour moyenne tension selon la revendication 1 ou 2, **caractérisée** en ce que le premier contact (6) est raccordé à une barre collectrice (8) qui est reliée par l'intermédiaire d'au moins un isolateur (9) à une paroi supérieure (2) du boîtier (1).

4. Cellule de commutation pour moyenne tension selon une ou plusieurs des revendications 1 à 3, **caractérisée** en ce que le premier contact (6) est disposé dans une chambre d'extinction (7).

5. Cellule de commutation pour moyenne tension selon la revendication 4, **caractérisée** par un guidage (21) dans la région de l'extrémité libre de la clavette de contact (15) dans la chambre d'extinction (7).

6. Cellule de commutation pour moyenne tension selon une ou plusieurs des revendications 1 à 5, **caractérisée** par un guidage articulé (22) isolé pour l'extrémité libre de la clavette de contact (15).

7. Cellule de commutation pour moyenne tension selon une ou plusieurs des revendications 1 à 6, **caractérisée** en ce que le deuxième contact (10) est réalisé sous forme de contact en couteau et disposé dans la zone de déplacement de la bielle (16).

8. Cellule de commutation pour moyenne tension selon une ou plusieurs des revendications 1 à 7, **caractérisée** en ce qu'une bielle supplémentaire (26) est disposée en liaison électrique avec un contact (25) et un prolongement de clavette de contact (29) électriquement isolé de la clavette de contact (15), un contact supplémentaire de mise à la terre (27) est disposé dans la zone de déplacement de la bielle supplémentaire (26), et les contacts (13, 25) sont mutuellement reliés par l'intermédiaire d'un fusible (31).

9. Cellule de commutation pour moyenne tension selon la revendication 8, **caractérisée** en ce que le troisième contact (13) est disposé sur une traversée (35) et le contact (25) sur une autre traversée (24), et en ce que les traversées (35, 24) sont reliées à l'extérieur du boîtier (1) par l'intermédiaire d'un fusible (31).

10. Cellule de commutation pour moyenne tension selon la revendication 1, 3, 4, 5 ou 6, **caractérisée** en ce que la liaison électrique est constituée d'au moins un pont flexible (36) entre le troisième contact (13) et la clavette de contact (15).

11. Cellule de commutation pour moyenne tension selon la revendication 10, **caractérisée** par des câbles rubans flexibles.

12. Cellule de commutation pour moyenne tension selon la revendication 11, **caractérisée** par des rubans à torons plats.

13. Cellule de commutation pour moyenne tension selon une ou plusieurs des revendications 10 à 12, **caractérisée** en ce que les ponts flexibles (36) possèdent, au moins à leur extrémité reliée à la clavette de contact (15), une face de raccordement massive respective (37), qui forme un couteau de contact (38) par son extrémité dépassant au-delà de l'extrémité de la clavette de contact.

14. Cellule de commutation pour moyenne tension selon la revendication 13, **caractérisée** en ce que le deuxième contact (10) est disposé dans la zone de déplacement du couteau de contact (38).
